Europäisches Patentamt

European Patent Office

Office européen des brevets

(11) Numéro de publication : **0 446 144 A1**

# (12) DEMANDE DE BREVET EUROPEEN

(21) Numéro de dépôt : **91400653.1**

(22) Date de dépôt : **08.03.91**

(51) Int. Cl.⁵ : **C09J 11/06, C09J 133/00**

(30) Priorité : 09.03.90 FR 9003016

(43) Date de publication de la demande :
**11.09.91 Bulletin 91/37**

(84) Etats contractants désignés :
**BE DE ES GB IT NL**

(71) Demandeur : **G E B, Société Anonyme dite:**
**30 rue de l'Industrie**
**F-93012 Bobigny Cédex (FR)**

(72) Inventeur : **Beaunez, Pierre**
**1, rue de l'Orme**
**F-92700 La Garenne Colombes (FR)**
Inventeur : **Sauvet, Georges**
**5, rue Charles Renouvier**
**F-75020 Paris (FR)**
Inventeur : **Helary, Gérard**
**7 Résidence les Epagnes**
**F-95640 Santeuil (FR)**

(74) Mandataire : **Bonnetat, Christian**
**CABINET BONNETAT 23, Rue de Léningrad**
**F-75008 Paris (FR)**

(54) **Compositions anaérobies.**

㊐ La présente invention concerne une composition anaérobie, comprenant :
— un monomère acrylique, et
— un amorceur de polymérisation radicalaire.
Selon l'invention, la composition présente un additif comportant au moins un groupe fonctionnel comprenant deux atomes d'azote reliés l'un à l'autre par deux atomes de carbone, chaque atome d'azote dudit groupe fonctionnel appartenant soit à un cycle aromatique, soit à une amine tertiaire.

EP 0 446 144 A1

Jouve, 18, rue Saint-Denis, 75001 PARIS

# COMPOSITIONS ANAEROBIES

La présente invention concerne des compositions anaérobies, lesquelles sont des mélanges liquides à base de monomères acryliques (en général des diacrylates ou diméthacrylates) dont la polymérisation radicalaire est inhibée par l'oxygène de l'air, mais se produit rapidement en absence d'oxygène et en présence d'un métal jouant le rôle de catalyseur.

Les compositions anaérobies présentent des propriétés remarquables, comme la résistance aux gaz et aux solvants, la résistance aux vibrations, la résistance sous pression (200 bars) et la compatibilité alimentaire, et sont utilisables notamment dans le domaine de l'étanchéité, du freinage et du blocage.

De plus, un de leurs avantages principaux consiste dans la possibilité d'obtenir des formulations prêtes à l'emploi, dites "monocomposant", qui présentent un rapport temps de stockage/temps de durcissement très élevé, de l'ordre de 5 x 10⁴.

Selon l'application envisagée, les compositions anaérobies diffèrent, notamment en ce qui concerne les fonctions chimiques portées par les monomères. Cependant, les compositions anaérobies connues présentent généralement les constituants de base suivants :

– un monomère acrylique (dans le domaine de l'étanchéité, c'est en général un diméthacrylate de polyéthylèneglycol),
– un amorceur de polymérisation radicalaire, de type peroxyde ou hydroperoxyde,
– un accélérateur de polymérisation (amine aromatique), et
– un inhibiteur de polymérisation radicalaire (benzoquinone, oxygène).

Quand une telle composition est déposée entre deux plaques métalliques, le peroxyde est décomposé sous l'action du métal en radicaux libres provoquant l'amorçage rédox des monomères acryliques. On admet généralement que la décomposition des hydroperoxydes en radicaux libres en présence d'un métal s'effectue selon le schéma réactionnel suivant :

$$M^{n+} + ROOH \rightarrow M^{(n+1)+} + RO° + OH^-$$

De plus, le confinement de la composition entre les plaques métalliques favorise l'appauvrissement en oxygène et en conséquence le durcissement de la composition.

Toutefois, tous les métaux n'ont pas le même effet catalytique sur la vitesse de durcissement des compositions anaérobies. Ainsi, en présence des métaux les plus couramment utilisés dans le domaine de l'étanchéité (laiton, acier), les durées de durcissement peuvent varier de quelques minutes (métaux à base de cuivre) à quelques heures (métaux à base de fer). La mauvaise homogénéité du polymère obtenu dans le premier cas a notamment pour conséquence une étanchéité à l'eau insatisfaisante de la composition sur un support à base de cuivre, en particulier pour des températures de l'eau supérieures à 40°C.

La présente invention a pour but d'éviter cet inconvénient, et concerne une composition anaérobie présentant une résistance (étanchéité) à l'eau chaude (température supérieure à 40°C) améliorée, notamment dans le cas d'un support à base de cuivre, tout en conservant des propriétés acceptables pour des supports à base d'autres métaux, en particulier de fer.

A cet effet, la composition anaérobie, comprenant :
– un monomère acrylique, et
– un amorceur de polymérisation radicalaire, est remarquable, selon l'invention, par un additif comportant au moins un groupe fonctionnel comprenant deux atomes d'azote reliés l'un à l'autre par deux atomes de carbone, chaque atome d'azote dudit groupe fonctionnel appartenant soit à un cycle aromatique, soit à une amine tertiaire.

Il s'est révélé que l'ajout d'un tel additif permet d'améliorer notablement les propriétés d'étanchéité de compositions anaérobies quand ces dernières sont appliquées sur des supports à base de cuivre, en ne nuisant pas à ces mêmes propriétés pour des supports à base de métaux autres que le cuivre, comme le fer. Des essais ont montré, comme on le verra en détail par la suite, que l'ajout d'un tel additif avait pour conséquence d'uniformiser les vitesses de durcissement des compositions anaérobies, quelle que soit la nature du support (fer ou cuivre en particulier), et cela du fait du pouvoir complexant, sélectif vis-à-vis des ions cuivriques, de cet additif.

Avantageusement, ledit additif peut être l'un des composés suivants :
– la N,N,N′,N′-tétraméthyléthylènediamine (TMEDA),
– la N,N,N′,N′-tétraéthyléthylènediamine (TEEDA),
– la 1,1′,4,7,7′-pentaméthyldiéthylènetriamine (PMDT)
– la 1,1,4,7,10,10-hexaméthyltriéthylènetétramine (HMTT),
– le tétraméthyltétraazacyclotétradécane (CYCLO N₄),
– l'orthophénantroline (OP), ou

– la 2,2'-bipyridine (BP).

De préférence, la proportion dudit additif dans ladite composition anaérobie est comprise entre 0,001 et 0,01% en poids de ladite composition.

Par ailleurs, la composition anaérobie peut comporter un accélérateur de polymérisation et/ou un inhibiteur de polymérisation, ainsi que des agents épaississant et/ou plastifiant.

Les monomères qui peuvent être utilisés dans la composition anaérobie de l'invention sont des mono-, di-, tri- ou tétraacrylates et/ou les méthacrylates correspondants. Des exemples typiques de ces monomères sont le diméthacrylate d'éthylèneglycol, de diéthylèneglycol, de triéthylèneglycol ou de tétraéthylèneglycol, ainsi que le diacrylate de tétraéthylèneglycol.

Les amorceurs utilisés sont de préférence des hydroperoxydes organiques de formule ROOH, dont le temps de demi-vie à température ambiante est très élevé, par exemple l'hydroperoxyde de cumène, de tertio-butyle, etc... La quantité d'amorceur qui est inclue dans la composition dépend du temps de durcissement souhaité en l'absence d'oxygène. Elle est comprise entre 0,1 et 5% en poids de la composition totale.

Pour obtenir un durcissement rapide de la composition, l'emploi d'accélérateurs de polymérisation est souhaitable. Ces accélérateurs comprennent des amines aromatiques (diméthylaniline, diméthylparatoluidine, ainsi que des composés acides, tels que les sulfimides (particulièrement la saccharine). La proportion de chacun de ces composants est de 0,1 à 3% en poids de la composition.

Dans la composition anaérobie, peuvent être également inclus des stabilisants et des inhibiteurs de polymérisation radicalaire. Ce sont en général des quinones, par exemple la naphtoquinone, la parabenzoquinone, etc...

De plus, la composition anaérobie peut comprendre des agents qui modifient la viscosité (agents thixotropes), des épaississants, des plastifiants et des colorants, l'ensemble de ceux-ci ne représentant pas plus de 50% en poids de la composition.

Les exemples suivants illustrent plus en détail la présente invention.

Tout d'abord, pour mettre en évidence l'influence des additifs de l'invention sur la cinétique de polymérisation des compositions anaérobies, on prépare une composition modèle, c'est-à-dire une composition différente de celles utilisables en pratique notamment en ce qui concerne le monomère employé, mais utile pour cette étude et se comportant de façon analogue aux compositions réellement utilisées.

Cette composition modèle comporte les constituants suivants :

– du méthacrylate de méthyle (MMA), monomère acrylate qui fournit un polymère linéaire, soluble et facile à analyser,

– du benzène, solvant qui a une constante de transfert pratiquement négligeable en polymérisation radicalaire,

– de l'hydroperoxyde de cumène (HPC), comme amorceur,

– de la saccharine et de la diméthylparatoluidine, comme accélérateurs.

Les proportions pondérales de ces constituants sont les suivants :

| | |
|---|---|
| – benzène | 76,8 % |
| – MMA | 22,0 % |
| – HPC | 0,6 % |
| – saccharine | 0,4 % |
| – diméthylparatoluidine | 0,2 % |
| | 100,0 % |

Les réactions de polymérisation sont réalisées sous vide afin d'éliminer les traces d'oxygène, en présence d'un métal (fer ou cuivre) utilisé sous forme de tournures, c'est-à-dire sous une forme proche des conditions réelles d'utilisation.

A ce mélange de base, on ajoute un additif selon l'invention.

La cinétique de polymérisation est définie en déterminant le rendement en polymère en fonction du temps, ce qui permet de calculer la vitesse de polymérisation pour chaque composition, incluant un additif particulier, étudiée. Ces vitesses de polymérisation sont indiquées dans le tableau I ci-dessous.

TABLEAU I : Vitesse de polymérisation du MMA et masse molaire du polymère obtenu, en présence ou non d'un additif de l'invention.

| Essai n° | nature de l'additif | nature du métal | Vitesse de polymérisation $(\times 10^5 \, mol.l^{-1}.s^{-1})$ | masse molaire $M_n(g.mol^{-1})$ |
|---|---|---|---|---|
| 1 | sans additif | Fe | 0,88 | 60 000 |
| 2 | sans additif | Cu | 8,10 | 8 000 |
| 3 | TMEDA | Fe | 0,67 | 30 000 |
| 4 | TMEDA | Cu | 1,80 | 55 000 |
| 5 | TEEDA | Fe | 0,85 | 60 000 |
| 6 | TEEDA | Cu | 3,1 | 20 000 |
| 7 | PMDT | Fe | 0,5 | 45 000 |
| 8 | PMDT | Cu | 0,37 | 60 000 |
| 9 | HMTT | Fe | 0,83 | 80 000 |
| 10 | HMTT | Cu | 0,71 | 70 000 |
| 11 | CYCLO $N_4$ | Fe | 0,47 | 100 000 |
| 12 | CYCLO $N_4$ | Cu | 0,30 | 170 000 |
| 13 | OP | Fe | 0,78 | 67 000 |
| 14 | OP | Cu | 0,78 | 55 000 |
| 15 | BP | Fe | 1,2 | 50 000 |
| 16 | BP | Cu | 2,7 | 30 000 |

Les résultats du tableau I montrent que l'ajout des additifs de l'invention provoque, par rapport à une composition de base ne comportant aucun additif (essais n° 1 et 2 ), une forte diminution de la vitesse de polymérisation en présence de cuivre, qui se rapproche de la vitesse de polymérisation en présence de fer.

Ces résultats sont confirmés par les mesures des masses molaires des polymères de MMA préparés en présence ou non d'un additif de l'invention. En absence d'additif, la masse molaire du polymère obtenu est beaucoup plus faible sur cuivre (8000) que sur fer (60000), ce qui confirme l'hypothèse d'une concentration beaucoup plus élevée de radicaux libres dans le premier cas. En présence d'additif de l'invention, les masses molaires des polymères obtenus sont proches sur cuivre et sur fer, comme le montrent les résultats du tableau I.

Le fait que les vitesses de polymérisation du MMA et les masses molaires des polymères obtenus sur fer et sur cuivre, en présence des additifs de l'invention, sont proches, suggère que des compositions anaérobies contenant de tels additifs auront des caractéristiques mécaniques voisines sur un support à base de fer et sur un support à base de cuivre. Il s'est effectivement révélé que les propriétés d'étanchéité de telles compositions sont notablement améliorées sur laiton, notamment.

Les exemples suivants illustrent le rôle de différents additifs incorporés dans des compositions anaérobies pour étanchéité de l'invention, en ce qui concerne les valeurs des couples de rupture obtenues pour des essais réalisés entre écrou et boulon après durcissement et notamment après un traitement à l'eau chaude.

EXEMPLE 1

On prépare la composition anaérobie suivante (en pourcentages pondéraux) :

| | |
|---|---|
| - diméthacrylate de triéthylèneglycol (monomère) | 58,5 % |
| - di(2-éthylhexanoate) de tétraéthylèneglycol (plastifiant) | |
| - poly(acétate de vinyle) (épaississant) | 39,0 % |
| - hydroperoxyde de cumène (amorceur) | 2,0 % |
| - saccharine (accélérateur) | 0,3 % |
| - diméthylparatoluidine (accélérateur) | 0,2 % |

A ce mélange A, on ajoute de la tétraméthyléthylènediamine (TMEDA) pour former les compositions B, C et D contenant respectivement 0,001, 0,005 et 0,01 % en poids d'additif. Ces compositions sont testées sur des boulons métalliques à base de cuivre (laiton) ou à base de fer (acier), afin de déterminer leur caractéristique de durcissement. Les essais sont réalisés sur des boulons ordinaires de 14 mm de diamètre par dépôt de la solution visqueuse sur la partie filetée. Les couples de rupture, exprimés en N.m, ont été mesurés avec une clé dynamométrique, après des durées différentes de durcissement. Les valeurs qui sont regroupées dans les tableaux II, III et IV sont, chacune, la moyenne de cinq essais.

TABLEAU II : Couples de rupture (en N.m) mesurés sur des boulons en laiton (Cu) ou en acier (Fe), après différentes durées d'application de compositions anaérobies ne contenant pas d'additif (A) ou contenant des proportions croissantes de TMEDA (B,C et D).

| Durée (heures) | A | | B | | C | | D | |
|---|---|---|---|---|---|---|---|---|
| | Cu | Fe | Cu | Fe | Cu | Fe | Cu | Fe |
| 1 | 26 | 14 | 22 | 6 | 19 | 0 | 16 | 0 |
| 3 | 25 | 23 | 28 | 19 | 25 | 11 | 19 | 8 |
| 6 | 26 | 24 | 36 | 31 | 35 | 22 | 28 | 19 |
| 24 | 25 | 34 | 39 | 36 | 45 | 34 | 44 | 31 |
| 72 | 25 | 34 | 48 | 37 | 53 | 36 | 60 | 33 |

En absence d'additif, et sur un support à base de cuivre, le couple de rupture maximal est obtenu en une heure et n'est pas modifié au cours du temps, ce qui indique une vitesse de durcissement très grande. Après 15 minutes, il est déjà égal à 19,5 N.m. L'ajout de TMEDA dans des proportions variables ralentit la vitesse de durcissement selon les concentrations ajoutées et augmente d'une façon très importante le couple de rupture maximal, qui peut atteindre la valeur de 60 N.m pour la composition D. Cette forte augmentation du couple de rupture suggère la formation d'un réseau plus homogène.

L'analyse des résultats obtenus sur un support à base de fer montre qu'en absence de TMEDA, après 72 heures, le couple de rupture (34 N.m) est supérieur à celui mesuré sur cuivre (25 N.m), ce à quoi l'on pouvait s'attendre. L'addition de TMEDA ne change pratiquement pas le couple de rupture maximal sur fer, ce qui indique l'absence de complexation des ions ferriques.

## EXEMPLE 2

Au mélange A de l'exemple 1, on ajoute de la 1,1,4,7,10,10-hexaméthyltriéthylènetétramine (HMTT) pour former les compositions E, F et G contenant respectivement 0,001, 0,005 et 0,01 % en poids de HMTT. Le temps de durcissement de ces compositions a été déterminé par mesure des couples de rupture sur des boulons de laiton et d'acier.

TABLEAU III : Couples de rupture sur des boulons en laiton (Cu) ou en acier (Fe) après différentes durées de durcissement de compositions anaérobies contenant du HMTT (E,F et G).

| Durée | E | | F | | G | |
|---|---|---|---|---|---|---|
| (heures) | Cu | Fe | Cu | Fe | Cu | Fe |
| 1 | 22 | 0 | 19 | 0 | 12 | 0 |
| 6 | 33 | 30 | 30 | 13 | 29 | 4 |
| 24 | 42 | 39 | 50 | 21 | 40 | 15 |
| 72 | 49 | 39 | 54 | 42 | 47 | 33 |

Les résultats indiqués sur le tableau III montrent une augmentation des couples de rupture sur les boulons en laiton par ajout de HMTT à la solution A. Les valeurs sont sensiblement identiques à celles mesurées quand l'additif est de la TMEDA, quelle que soit la nature du métal.

## EXEMPLE 3

Afin de tester l'étanchéité des compositions anaérobies, on mesure les couples de rupture sur des boulons en acier ou en laiton, après immersion dans de l'eau à différentes températures. On teste les compositions A,D et F. Les compositions D et F correspondent respectivement à l'addition de 100 ppm de TMEDA et de 50 ppm de HMTT à la solution A. Elles peuvent être considérées comme les compositions qui donnent des valeurs de couple de rupture les plus satisfaisantes.

Ces compositions ont été déposées sur la partie filetée du boulon et, après serrage de l'écrou, on laisse durcir pendant 72 heures. Après ce laps de temps, les boulons sont immergés dans l'eau pendant 72 heures.

TABLEAU IV : Couples de rupture mesurés sur des boulons en laiton (Cu) ou acier (Fe) après immersion dans l'eau pendant 72 heures aux températures de 20°C, 40°C, 65°C et 80°C.

| Température | A | | D | | F | |
|---|---|---|---|---|---|---|
| de l'eau | Cu | Fe | Cu | Fe | Cu | Fe |
| 20°C | 24 | 34 | 50 | 34 | 55 | 32 |
| 40°C | 23 | 35 | 48 | 35 | 48 | 35 |
| 65°C | 4 | 25 | 15 | 32 | 20 | 35 |
| 80°C | 2 | 14 | 10 | 24 | 9 | 24 |

La comparaison entre les valeurs des couples de rupture mesurées après 72 heures d'immersion dans l'eau à 20°C et celles mesurées aux températures de 65 et 80°C (tableau IV) montre une diminution de ces valeurs quand la température augmente. Cette diminution est particulièrement importante dans le cas de la composition A, qui ne contient pas d'additif, sur un support à base de cuivre, et relativement faible pour les compositions D et F. Ces résultats montrent que l'ajout des additifs de l'invention améliore les propriétés mécaniques des résines anaérobies, en particulier sur un support à base de cuivre.

Par ailleurs, on notera que les compositions anaérobies de l'invention ont une stabilité au stockage supérieure à un an sans altération et/ou perte notable de leur activité.

## Revendications

1 - Composition anaérobie; comprenant :
− un monomère acrylique, et

– un amorceur de polymérisation radicalaire,
caractérisée par un additif comportant au moins un groupe fonctionnel comprenant deux atomes d'azote reliés l'un à l'autre par deux atomes de carbone, chaque atome d'azote dudit groupe fonctionnel appartenant soit à un cycle aromatique, soit à une amine tertiaire.

**2** - Composition anaérobie selon la revendication 1,
caractérisée en ce que ledit additif est la N,N,N',N'-tétraméthyléthylènediamine.

**3** - Composition anaérobie selon la revendication 1,
caractérisée en ce que ledit additif est la N,N,N',N'-tétraéthyléthylènediamine.

**4** - Composition anaérobie selon la revendication 1,
caractérisée en ce que ledit additif est la 1, 1',4,7,7'-pentaméthyldiéthylènetriamine.

**5** - Composition anaérobie selon la revendication 1,
caractérisée en ce que ledit additif est la 1,1,4,7,10,10-hexaméthyltriéthylènetétramine.

**6** - Composition anaérobie selon la revendication 1,
caractérisée en ce que ledit additif est le tétraméthyltétraazacyclotétradécane.

**7** - Composition anaérobie selon la revendication 1,
caractérisée en ce que ledit additif est l'orthophénantroline.

**8** - Composition anaérobie selon la revendication 1,
caractérisée en ce que ledit additif est la 2,2'-bipyridine.

**9** - Composition selon l'une quelconque des revendications 1 à 8,
caractérisée en ce que la proportion dudit additif est comprise entre 0,001 et 0,01 % en poids de ladite composition.

**10** - Composition selon l'une quelconque des revendications 1 à 9,
caractérisée en ce qu'elle comprend un accélérateur de polymérisation.

**11** - Composition selon l'une quelconque des revendications 1 à 10,
caractérisée en ce qu'elle comprend un inhibiteur de polymérisation.

**12** - Composition selon l'une quelconque des revendications 1 à 11,
caractérisée en ce qu'elle comprend un agent épaississant.

**13** - Composition selon l'une quelconque des revendications 1 à 12,
caractérisée en ce qu'elle comprend un agent plastifiant.

Office européen
des brevets

**RAPPORT DE RECHERCHE EUROPEENNE**

Numéro de la demande

EP 91 40 0653

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 146 501 (SUMITOMO CHEM. CO.)<br>* Exemple; revendication 1 *<br>--- | 1 | C 09 J 11/06<br>C 09 J 133/00 |
| A | FR-A-2 440 981 (BOSTIK S.A.)<br>* Revendication 1 *<br>--- | 1 | |
| A | DE-A-1 569 866 (LOCTITE CORP.)<br>* Exemple *<br>----- | 1 | |

**DOMAINES TECHNIQUES RECHERCHES (Int. Cl.5)**

C 09 J

Le présent rapport a été établi pour toutes les revendications

| Lieu de la recherche | Date d'achèvement de la recherche | Examinateur |
|---|---|---|
| LA HAYE | 23-04-1991 | GLIKMAN J-F.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P0402)